# EUROPÄISCHE PATENTANMELDUNG

(11) **EP 1 014 634 A1**
(43) Veröffentlichungstag der Anmeldung: **28.06.2000**
(21) Anmeldenummer: 99123978.1
(22) Anmeldetag: 03.12.1999
(51) Int. Cl.: H04L 12/66, H04Q 3/66

(54) **Verfahren und Vorrichtung zum Aufbau von Verbindungen von einem Endgerät über ein erstes Netz zu einem Netzzugangspunkt eines zweiten Netzes**

(30) Priorität: 03.12.1998 DE 19855922
(71) Anmelder: SIEMENS AKTIENGESELLSCHAFT, 80333 München (DE)
(72) Erfinder: Rammig, Ralf, Dr., 81739 München (DE); Lüttge, Karsten, 10318 Berlin (DE); Moritz, Peter, 85540 Haar (DE)

(57) **Zusammenfassung**

Die Erfindung betrifft ein Verfahren zum Zugriff auf ein Datennetz wie das Internet über ein erstes Kommunikationsnetz, insbesondere ein Telefonnetz, wobei der Zugang über sogenannte Zugangsknoten (Points-of-Presence, PoP) geschieht. Weiterhin betrifft die Erfindung eine Anordnung welche einen Zugangspunkt zu einem zweiten Netz (insbesondere Datennetz) darstellt.
Ein Verbindungsaufbauwunsch wird von dem Benutzer in das erste Netz gesendet. Dies geschieht zum Beispiel durch Anwahl einer Nummer des Internet Service Providers (ISP). Dieser Ruf wird jedoch in dem ersten Netz nicht sofort durchgestellt, sondern zuerst zu einem speziellen Netzelement geleitet, welches diesen Ruf auswertet. Dieses spezielle Netzelement hat Informationen, über welche Zugangsports der angewählte ISP tatsächlich verfügt. Weiterhin steht ihm eine Strategie zur Verfügung, nach welcher der dann für den Ruf tatsächlich verwendete Zugangsport ausgewählt wird.

## Beschreibung

Die Erfindung betrifft ein Verfahren zum Zugriff auf ein Datennetz wie das Internet über ein erstes Kommunikationsnetz, insbesondere ein Telefonnetz, wobei der Zugang über sogenannte Zugangsknoten (Points-of-Presence, PoP) geschieht. Weiterhin betrifft die Erfindung eine Anordnung welche einen Zugangspunkt zu einem zweiten Netz (insbesondere Datennetz) darstellt.

Um von einem Endgerät aus einen Zugang in ein Datennetz wie das Internet zu bekommen, gibt es verschiedene Möglichkeiten. Einerseits bilden Endgeräte eigene Netze (z. B. sogenannte Local Access Networks, LAN), in welchen dann spezielle Verbindungsrechner (sogenannte Gateways oder Router) eine Verbindungsaufgabe zu dem Datennetz (Internet) übernehmen. Dazu ist es auch notwendig, Protokolle umzusetzen, Wegewahlinformationen zu ermitteln und Sicherungsaufgaben wahrzunehmen (Firewall).

Eine weitere, ebenfalls häufig gewählte Variante ist der Zugang von einem Endgerät über ein leitungsvermitteltes Netz (in der Regel das Telefonnetz, PSTN) zu einem sogenannten Internet Service Provider (ISP), welcher dann mit Hilfe von Einwählknoten (PoP, Point of Presence) einen Zugang schafft. Dabei wird von dem Endgerät (welches z. B. ein Modem enthält, ein Gerät zum Umsetzen von digitalen in analoge Signale und umgekehrt, oder eine sogenannte ISDN-Karte, sofern es sich bei dem ersten Netz um ein digitales Netz wie ISDN handelt) ein Zugangscode gewählt. Dieser adressiert den Einwählknoten, eine Verbindung wird durch das erste Netz aufgebaut und nach einer Authentisierungsprozedur stellt der Einwählknoten den Zugang zu dem Datennetz her.

Ein ISP bietet zumeist mehrere Internet-Zugangspunkte (PoPs) an. Diese können sich zum Beispiel unterscheiden in der Distanz, welche sie zum Benutzer haben (Nahbereich, Fernbereich) oder in der Qualität der angebotenen Dienste (Bandbreite, digitale Dienste, Erreichbarkeit durch Anzahl der Modems etc.). Dabei kann ein Benutzer eine Auswahl des Zugangsanbieters treffen, indem er über den PC und ein zugehöriges Modem eine entsprechende, ihm vorher bekannte, Telefonnummer anwählen läßt (zum Beispiel). Sind bei dem angewählten Zugangsanbieter allerdings alle Eingangsmodems belegt so bekommt der Benutzer nur ein Besetzt-Signal zurückgemeldet. Ein Verbindungsaufbau kommt nicht zustande.

In WO 98/41043 wird beschrieben, wie ein Benutzer ein Telekommunikationsnetz verwenden kann, um Zugang zu dem Internet zu erlangen. Weiterhin befindet sich in dem beschriebenen Telekommunikationsnetz ein spezifisches Dienstelement (service node), welches Wegewahl (Routing) Aufgaben übernimmt. Diese Patentanmeldung beschreibt eine Lösung, insbesondere für Sprachübertragung über Internet, wie für einen Benutzer (first subscriber) eintreffende Anrufe mit Hilfe des spezifischen Dienstelementes in dem zweiten Netz umgeleitet werden können. Diese Wegewahl kann dabei abhängig von bestimmten Informationen über Auslastung von Netzelementen und geographischer Anordnung erfolgen.

Aufgabe der Erfindung ist es, eine Möglichkeit anzugeben, die Anwahl eines Zugangspunktes zu einem zweiten Netz über ein erstes Netz zu vereinfachen. Dabei können Informationen über die Auslastung der einzelnen Zugangspunkte verwendet werden.

Diese Aufgabe wird gelöst durch ein Verfahren gemäß Anspruch 1 und durch eine Vorrichtung gemäß Anspruch 17. Die Lösung der gestellten Aufgabe stützt sich dabei wesentlich auf das Vorhandensein eines speziellen Netzelementes in dem ersten Netz, über welches ein Benutzer eine Verbindung zu dem Zugangspunkt des zweiten Netzes aufbaut. Ein Verbindungsaufbauwunsch wird von dem Benutzer wie bisher in das erste Netz gesendet. Dies geschieht zum Beispiel durch Anwahl einer Nummer des Internet Service Providers (ISP). Dieser Ruf wird jedoch in dem ersten Netz nicht sofort durchgestellt, sondern zuerst zu einem speziellen Netzelement geleitet, welches diesen Ruf auswertet. Dieses spezielle Netzelement hat Informationen, über welche Zugangsports der angewählte ISP tatsächlich verfügt. Weiterhin steht ihm eine Strategie zur Verfügung, nach welcher der dann für den Ruf tatsächlich verwendete Zugangsport ausgewählt wird. Unter Anwendung der Auswahlstrategie wird dann aus den verfügbaren Zugangsports der günstigste ausgewählt und der Ruf in dem ersten Netz dorthin weitergeleitet. Der Zugang in das zweite Netz, mit Identifikations- und Authentisierungsprozeduren kann wie bisher geschehen.

Ein wesentliche Vorteil der Erfindung aus der Sicht des Benutzers ist es, daß die Wahrscheinlichkeit einer erfolgreichen Einwahl bei einem ISP für ihn stark erhöht wird.

Für den Zugangsanbieter auf der anderen Seite ergeben sich ebenfalls mehrere Vorteile. Durch eine bessere Verteilung der Einwahlversuche wird die kostenintensive Hardware (Modems etc.), welche zur Einwahl zur Verfügung gestellt werden muß, und auch die Einwahlleitungen, besser ausgenutzt. Eine zentrale Einwahlnummer für den Kunden ist ausreichend. Durch die höhere Erfolgsquote bei den Einwahlversuchen wird die Zufriedenheit der Kunden des ISP (Benutzer) ebenfalls erhöht.

Auch für den Betreiber des ersten Netzes (zum Beispiel die Telekom) ist die Erfindung von Vorteil. Zum einen stellt dieser Netzknoten mit der Verteilung der Rufe eine gleichmäßigere Auslastung des Netzes sicher. Eine einheitliche Einwahlnummer kann der Netzbetreiber dem ISP als Dienst anbieten, was wiederum die Benutzung des ersten Netzes sowohl für Benutzer als auch für die ISPs attraktiver macht.

Vorteilhafte Ausgestaltungen und Weiterbildungen sind in den Unteransprüchen angegeben.

Die dem speziellen Netzknoten zur Verfügung stehende Information kann von verschiedener Art sein. Beispielsweise kann weitergehende Information gespeichert sein, für die Qualität des Zugangspunktes. Die Qualität beinhaltet zum Beispiel die von den jeweiligen Zugangspunkten zur Verfügung gestellte Bandbreite, mögliche Übertragungsgeschwindigkeit oder Sicherungsprotokolle. Eine Strategie des zentralen Netzknotens könnte dann die Auswahl des jeweils besten (schnellsten oder sichersten) Zugangspunktes sein. Diese Information wird einmalig, bei Einrichtung des neuen Zugangspunktes, bei dem speziellen Netzknoten abgespeichert.

Die Auswahl kann dann auch über zusätzliche Informationen geschehen, die der Benutzer mit seinem Ruf übermittelt, implizit (etwa über Signalisierung #7) oder explizit, beispielsweise durch eine mitgelieferte Extension zur Rufnummer:
- -1 für einen kostengünstigen Zugang,
- -2 für einen Zugang mit hoher Übertragungsrate,
- -3 für einen Zugang mit hoher Datensicherheit, etc.

Dadurch wird die Auslastung der Hardware des ISP weiter optimiert und der Benutzer kann sich immer den für seine momentanen Bedürfnisse gerade passenden Zugang auswählen.

Weiterhin vorteilhaft für das Verfahren ist es, wenn dem speziellen Netzknoten Informationen über die aktuelle Auslastung der einzelnen Netzzugangspunkte zur Verfügung stehen.

Da sich dieses mit jedem neuen Aufruf ändern kann, muß diese Information in dem speziellen Netzknoten ständig aktualisiert werden.
Existiert eine Verbindung zwischen dem speziellen Netzknoten und den Zugangspunkten, so kann diese Information über die Auslastung ( 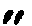 Load") in regelmäßigen Abständen vom Netzknoten abgefragt oder vom Zugangspunkt zum Netzknoten übermittelt werden. Weiterhin kann diese Information auch nur übertragen werden, wenn bestimmte Ereignisse eintreten, etwa die Auslastung des Zugangspunkte einen bestimmten Wert (z. B. 80%) überschreitet.

Sofern diese Synchronisationsmöglichkeit des speziellen Netzknotens nicht gegeben ist, kann dieser die benötigten Informationen anders ermitteln, zum Beispiel durch Schätzungen (Zählung und Überwachung der vermittelten Rufe oder Ruf-Versuche), oder durch ein Trial-and-Error-Verfahren. Bei diesem leitet der spezielle Netzknoten den Ruf zu einem geeigneten Einwahlknoten oder Zugangspunkt weiter. Ist dieser nicht bereit, den Ruf anzunehmen, fällt der Ruf an den speziellen Netzknoten zurück, dieser kann nun einen nächsten Zugangspunkt auswählen und den Ruf dorthin weiterleiten. Dieses mehrfache Weiterleiten nach fehlgeschlagenen Versuchen läuft sehr schnell und für den Anrufer unsichtbar ab.

Die genannten Verfahren haben den Vorteil, daß die bislang verwendeten Konfigurationen und Protokolle mit geringen Änderungen weiterhin benutzt werden können.

Eine Verteilung kann einfach über stochastische Verteilungsfunktionen erreicht werden. Ein Zugangspunkt bekommt etwa 20 % aller Rufe zugeteilt, wenn dieser 20 % der für den Zugang zu dem zweiten Netz existierenden Ports bedient. Dies kann dann einfach durch Vermittlung jedes fünften Rufes gelöst werden. Weiterhin kann auch in dem ersten Netz ermittelbare Information wie Zeitdauer des Rufes, benutzte Übertragungsgeschwindigkeiten oder Bandbreiten, tatsächliche Netzauslastung (des ersten Netzes) etc. zur Verteilung verwendet werden.

Um seinen gegenwärtigen (Auslastungs-)Zustand an den speziellen Netzknoten zu übermitteln, hat ein Zugangspunkt unter Ausnutzung des bisherigen Technik noch eine weitere Möglichkeit: da der Zugangspunkt sowohl zu dem zweiten als auch zu dem ersten Netz eine Verbindung hat, kann er ebenfalls Rufe in das erste Netz tätigen. Dabei wird dann durch jeweilige Anwahl einer bestimmten Rufnummer der gegenwärtige Zustand übermittelt. Dies kann wie bereits weiter oben geschildert, mit der Endziffer der gewählten Rufnummer geschehen: xxx-1: Auslastung unter 50%, xxx-2: Auslastung 50%, xxx-3: Auslastung größer 80%.
Dieser Ruf muß nicht zum speziellen Netzknoten in dem ersten Netz durchgestellt werden, er kann bereits in einem Vermittlungsknoten ausgewertet werden, zum Beispiel mit Hilfe eines IN Triggers (Ermittlung des 'anrufenden' Zugangspunktes und der mit dem Ruf übertragenen Information) und die Information dann zu dem speziellen Netzknoten weitergeleitet werden.

Weiterhin vorteilhaft für die Erfindung ist es, wenn der spezielle Netzknoten eine Konfigurierungsschnittstelle besitzt, über die die oben geschilderten Verteilungsstrategien geändert und angepaßt werden können.

Da die einem ISP zugehörigen Netzzugangspunkte unter Umständen geographisch weiter auseinander liegen und sich daher für den Benutzer die Kosten eines Rufes zweier Netzzugangspunkte stark unterscheiden können, ist es vorteilhaft, die zur Verfügung stehenden Zugangspunkte in Gruppen einzuteilen (sogenannte 'Cluster'). Eine Auswahlstrategie kann dann die Zugangspunkte in bestimmten Clustern bevorzugen oder sogar ausschließlich aus bestimmten Clustern auszuwählen.

Zur Erfindung gehört außerdem ein Netzzugangspunkt, der ausgebildet ist, wie bisher bekannte und verwendete Netzzugangspunkte. Zusätzlich besitzt dieser Netzzugangspunkt eine weitere Schnittstelle zu dem ersten Netz, über welche er bestimmte Daten austauschen kann, die Informationen über seinen Auslastungszustand enthalten. Dieses vereinfacht bzw. ermöglicht die Ausführung der in der Erfindung beschriebenen Verteilungsstrategie der Rufe erheblich.

Im folgenden wird die Erfindung anhand von Ausführungsbeispielen erläutert. Dabei zeigen
Figur 1 einen beispielhaften Aufbau eines ersten Netzes (PSTN), über das ein Zugangspunkt zu einem zweiten Netz (Internet) ermöglicht wird,
Figur 2 einen weiteren beispielhaften Aufbau entsprechend Figur 1, wobei ein Netzknoten (IN) im ersten Netz mit den Zugangspunkten (PoP) zu dem zweiten Netz Informationen austauschen kann,
Figur 3 noch einen beispielhaften Aufbau entsprechend Figur 1 und Figur 2, wobei mehrere Zugangspunkte (PoP1 und PoP2) zu einem Cluster (C) zusammengefaßt sind,
Figur 4 ein Ablaufdiagramm, welches die Bearbeitung von Zugangswünschen zeigt, sowie die Auslastungsmeldungen von zwei Zugangspunkten, und
Figur 5 die Informationsübertragung von einem Zugangspunkt zu dem speziellen Netzknoten mittels eines 'IN-Anrufes'.

Einschränkungen in den Figuren und Ausführungsbeispielen sind für die Erfindung nicht zwingend.

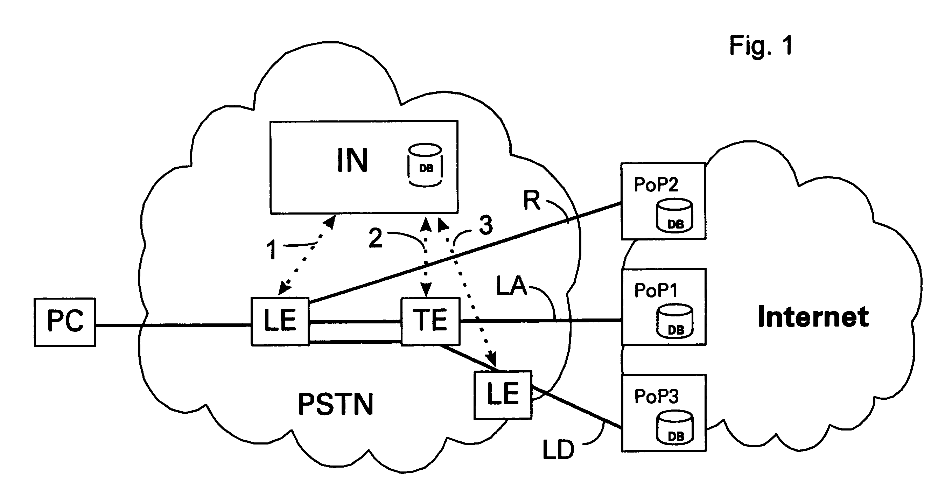

In Figur 1 ist ein beispielhafter Aufbau eines ersten, leitungsvermittelten Netzes (PSTN) gezeigt, über den ein Benutzer mit einem Endgerät (PC) zu einem zweiten Netz (Internet) Zugang erhalten will. Bei dem leitungsvermittelten Netz kann es sich etwa um ein bekanntes Telefon-Festnetz oder Mobilnetz handeln. Andere Übertragungsnetze sind möglich.

In diesem ersten Netz befindet sich ein spezieller Netzknoten (IN), welcher über eine Speichermöglichkeit verfügt (DB). In dieser Datenbank sind für jeden bekannten Zugangspunkt die aktuellen Auslastungs-Daten gespeichert. Falls diese Daten aus einem Grund verloren gehen sollten, ist es vorteilhaft, wenn eine sogenannte 'Default'-Konfiguration mit voreingestellten Grundwerten existiert. Diese Aufgabe kann in einem Intelligenten Netz eine übergeordnete Management Instanz, der sogenannte Service Management Point (SMP) übernehmen, welcher in den Figuren jedoch nicht explizit aufgeführt sondern in (IN) enthalten ist. Der SMP kann weitergehende Informationen enthalten, wie die verfügbaren Zugangspunkte und Cluster, sowie die Zuordnung der Zugangspunkte zu den Clustern.
Die einzelnen Vermittlungsstellen (LE, TE) können mit diesem speziellen Netzknoten Informationen austauschen (1, 2, 3), zum Beispiel über bei den Vermittlungsstellen eingehende Verbindungswünsche, vergebliche Einwahlversuche, die Netzauslastung usw..

Zu dem zweiten Netz (Internet) existieren in diesem Beispiel drei Zugangspunkte (PoP1, PoP2, PoP3), welche ebenfalls über Speichermittel (DB) verfügen können.
Der Benutzer hat drei Möglichkeiten, einen Zugang zu dem zweiten Netz zu erlangen:
- eine 'Ortsverbindung' (R, Regional): lediglich eine Ortsvermittlungsstelle (LE, Local Exchange) wird passiert,
- eine 'Nahverbindung' (LA, Local Access): es werden weitere Vermittlungsstellen (TE, Transit Exchange) passiert,
- eine 'Fernverbindung' (LD, Long Distance).

Eine Realisierungsmöglichkeit des ersten Netzes, insbesondere des speziellen Netzknotens, bietet die Technik der Intelligenten Netze, welche in der Protokoll-Suite Q.12xx der ITU für einen Fachmann hinreichend beschrieben ist. Dabei entsprechen die Vermittlungsstellen den sogenannten SSPs (Service Switching Points), welche eingehende Rufe untersuchen, und entscheiden, ob es sich bei ihnen um sogenannte 'IN-'Rufe handelt, und diese dann nicht an eine gewählte Zieladresse sondern zuerst an einen zentralen Netzknoten, den sogenannten SCP (Service Control Point) weiterleiten. Dieser analysiert die von dem SSP eintreffende Abfrage anhand von weiteren Daten, welche er gespeichert hält und leitet den Ruf dann entsprechend, an den ausgewählten geeigneten Zugangspunkt, weiter.

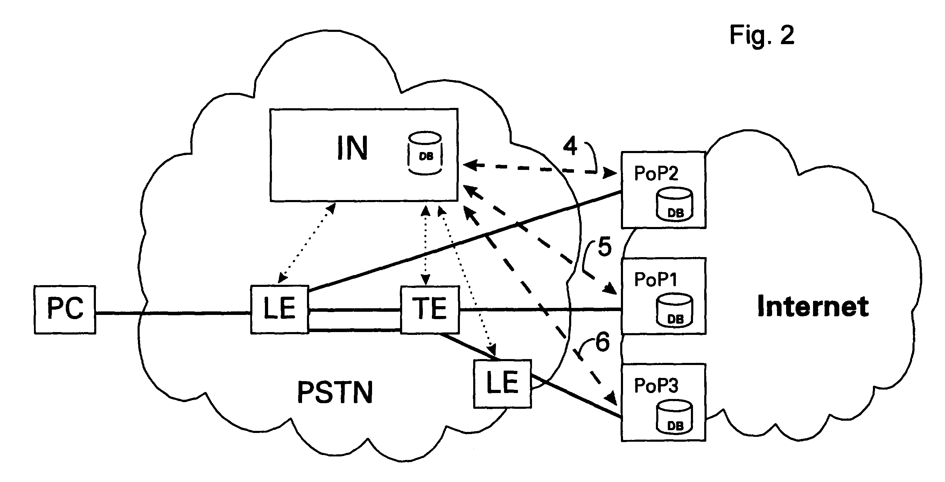

Figur 2 zeigt den gleichen beispielhaften Aufbau der beiden Netze. Ergänzend wurden Kommunikationsmöglichkeiten (4, 5, 6) der Zugangspunkte (PoP1, PoP2, PoP3) zu dem speziellen Netzknoten (IN) eingezeichnet.
Über diese Kommunikationsmöglichkeit können die Zugangspunkte (PoP) die von dem Netzknoten (IN) gewünschten Informationen übertragen, entweder unaufgefordert oder nach Abfrage. Dies kann in regelmäßigen Abständen oder auch ereignisgesteuert geschehen.
Die Übertragung kann auf vielfältige Weise geschehen:
- durch eine Datenverbindung mit TCP/IP
- durch eine temporäre Wählverbindung oder auch eine Standleitung,
- durch INAP-Nachrichten mit der SS#7 Signalisierung, dabei benimmt sich der PoP wie eine IN Ressourcenplattform (SRF, specialized resource function),
- mit Hilfe von SNMP (Simple Network Management Protocol),
- durch IN-Rufe, die der Zugangspunkt seinerseits in dem ersten Netz tätigt, wie bereits weiter oben beschrieben.
Diese, an sich dem Fachmann bekannten Techiken müssen dabei in geeigneter Weise erweitert und angepaßt werden. Diese Aufzählung ist dabei nicht vollständig.

Die übertragenen Informationen, welche sich auf die Auslastung des Zugangspunktes beziehen, können beispielsweise folgende Angaben verwenden:
- Anzahl der belegten Modems,
- Anzahl der angemeldeten Benutzer,
- Auslastung der CPU
- Speicherbelegung
- Durchsatz, durchlaufendes Datenvolumen,
- Anzahl der verloren gegangenen Datenpakete.

Ein SCP kann auch seinerseits diese Informationen abfragen, in regelmäßigen Abständen ('Polling'), oder auch bei bestimmten Ereignissen, zu Beispiel, nachdem ein Ruf abgewiesen worden ist.

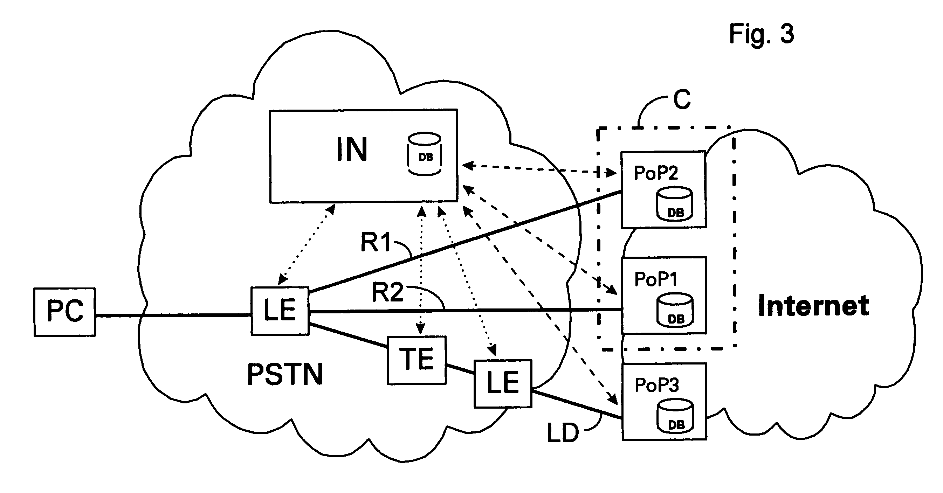

Figur 3 ist gegenüber Figur 1 und Figur 2 leicht abgeändert. Hier soll das Prinzip der Gruppenbildung ('Cluster') veranschaulicht werden. Daher sind zwei der Zugangspunkte (PoP1, PoP2) über 'Ortsverbindungen' (R1, R2) erreichbar, d. h. lediglich eine Ortsvermittlung (LE) ist zu passieren. Der dritte Zugangspunkt dagegen ist im Fernbereich, eine Verbindung dorthin wäre teurer und ist daher nicht gewünscht. Eine Clusterbildung kann auf verschiedene Weisen geschehen, etwa alle Zugangspunkte, die in einer bestimmten geographischen Region liegen, die zu einem bestimmten Zugangsanbieter gehören, zu denen eine minimale Anzahl von Vermittlungsknoten durchlaufen wird, etc.
Aus den genannten Gründen wird nun aus PoP1 und PoP2 ein Cluster (C) gebildet, und Aufrufwünsche des Benutzers (PC) werden ausschließlich oder bevorzugt zu einem der Zugangspunkte des Clusters geleitet. Der dritte Zugangspunkt (PoP3) wird nicht oder nur in Ausnahmefällen als Zugangspunkt ausgewählt und angesteuert.

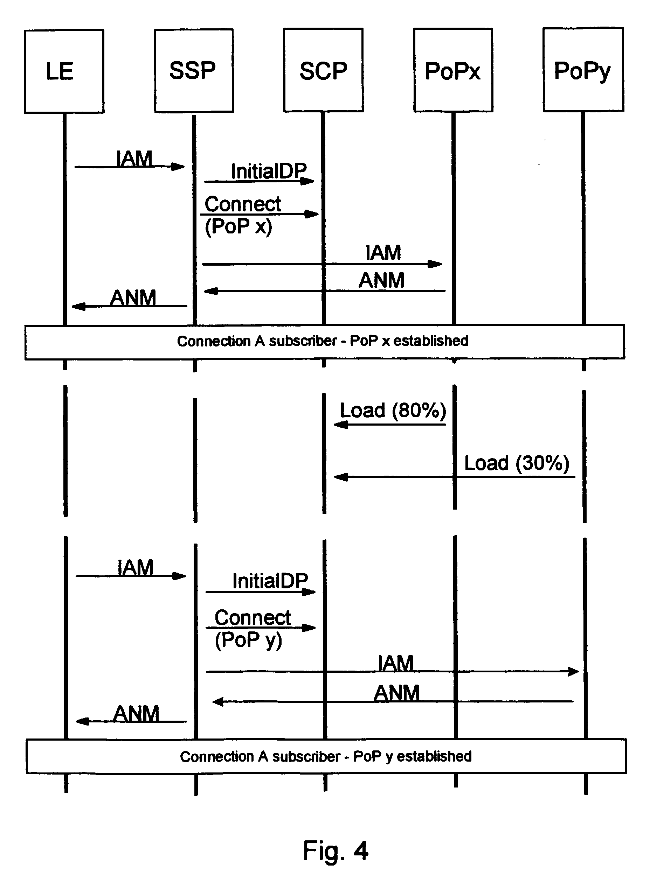

Figur 4 nun zeigt ein Ablaufdiagramm, wie ein möglicher Ruf eines Benutzers behandelt wird. Dabei wird davon ausgegangen, daß die in Figur 2 beschriebenen Kommunikationsmöglichkeiten zwischen dem Zugangspunkt (PoP) und dem speziellen Netzknoten (hier: SCP) vorhanden sind.

Eine Ortsvermittlung (LE) kommuniziert dabei in diesem Fall mit einem IN Vermittlungsknoten (SSP) mittels ISUP (Integrated services user part), andere Möglichkeiten sind denkbar. der SSP wiederum kommuniziert mit dem speziellen Netzknoten (SCP) über INAP (Intelligent Network Application Part), ein spezielles Protokoll, welches bei den Intelligenten Netzen angewendet wird.
Zwischen den SSPs und den Zugangspunkten (PoP) werden Signalisierungsnachrichten über einen Signalisierungskanal (mit Hilfe des Signalisierungsprotokolls ISUP) gesendet. Ein eingehender Ruf wird von der Ortsvermittlung zu einem IN Vermittlungsknoten geliefert (IAM, Initial Address Message). Dieser überprüft, ob es sich um einen In Ruf, also in dem erfindungsgemäßen Fall um einen Zugangswunsch zu einem zweiten Netz über einen Zugangspunkt handelt. Ist dies der Fall, so wird mittels INAP an den speziellen Netzknoten (SCP) eine Anfrage abgeschickt (InitialDP), welche zum Zweck hat, die tatsächliche Zielrufnummer zurückgeliefert zu bekommen. Der SCP führt dann die erfindungsgemäße Zuteilungsfunktion aus, wobei es sich bei IN um das Ausführen eines Programmes (SLPᵢ, service logic program instance) handelt. Dieses überprüft, abhängig von der gewählten Zuteilungsfunktion, die ihm bekannten Auslastungen der verfügbaren Zugangsstellen, wählt eine Zugangsstelle als die günstigste aus (PoPx) und schickt dann eine Antwort-Nachricht (Connect (PoPx)) an die IN Vermittlungsstelle zurück.
Die Vermittlungsstelle leitet dann den Ruf an den Zugangspunkt (PoPx) weiter (IAM, ANM).

In dem in Figur 4 beschriebenen Beispiel liefern alle Zugangspunkte ihren aktuellen Auslastungswert in regelmäßigen Abständen an den SCP. Der SCP aktualisiert ensprechend die in (DB) gespeicherten Tabellen und wertet die Auslastungswerte aus. In dem beschriebenen Fall ist der PoPx zu 80% ausgelastet, der PoPy dagegen nur zu 30%.

Ein erneuter Ruf wird zunächst ebenso behandelt, wie oben beschrieben. Da sich aber die Informationen des SCP über die Auslastung der einzelnen Zugangspunkte inzwischen verändert hat, wird der nächste Ruf nicht mehr an PoPx geleitet, damit der ohnehin schon hohe Auslastungsgrad nicht noch gesteigert wird.

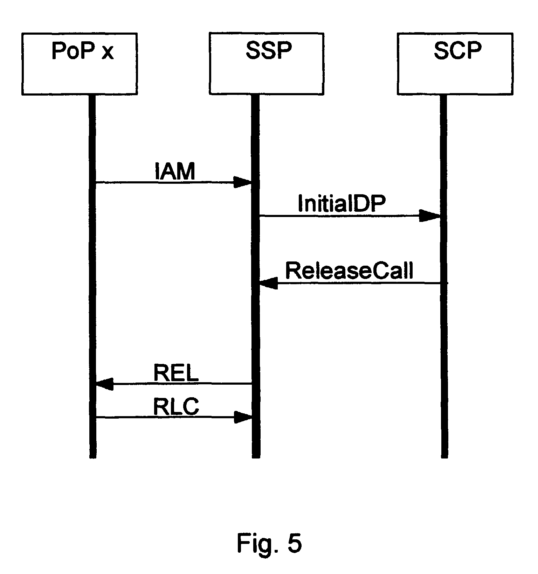

Figur 5 zeigt, wie ein Zugangspunkt (PoPx) seinen Lastzustand an den speziellen Netzknoten (SCP) schickt. Dies kann zum Beispiel zweimal pro Stunde erfolgen, damit der SCP immer ausreichend genaue Angaben für die Auswahlstrategie zur Verfügung hat. Es können aber auch andere Strategien gewählt werden, etwa eine Mitteilung, sobald sich die Last um einen signifikanten Wert (z. B. 10% nach oben oder unten) verändert hat, oder wenn ein kritischer Punkt (z. B. Gesamtauslastung über 80%, threshold) erreicht ist.

Ein Zugangspunkt wählt zur Übertragung die Nummer eines Aktualisierungs-Dienstes, wobei mindestens eine Ziffer an die Rufnummer anhängt (z. B. zwei Ziffern xxx-80 für 'momentane Auslastung bei 80%'), d. h. die Informationen werden mit der bekannten 'Call Setup Message' (IAM) übertragen.
Der Anruf wird zu einem SSP weitergeleitet, welcher ihn zu einem SCP weiterleitet (InitialDP. Im SCP kann der Mechanismus durch ein Programm (Service Logic Program, SLP) realisiert werden, welches die neuen Werte in die Datenbank einträgt, damit diese für den nächsten Verbindungswunsch zur Verfügung stehen. Dafür ermittelt der SCP aus der InitialDP Nachricht den Zugangspunkt sowie dessen momentanen Lastzustand. Der SCP weist dann den Verbindungswunsch ab (ReleaseCall).
Der SSP seinerseits leitet den Verbindungsabbau zu dem Zugangspunkt weiter (REL, RLC).
Zu keinem Zeitpunkt entsteht eine kostenpflichtige Sprachverbindung. Die gesamte Information wird ausschließlich im Signalisierungsnetz übertragen.

### Abkürzungsverzeichnis

- ANM: Answer Message
- DB: Data Base, Datenbank
- DP: Destination Point
- IAM: Initial Address Message
- IN: Intelligent Network
- INAP: Intelligent Network Application Part
- ISP: Internet Service Provider
- ITU: International Telecommunication Union
- ISUP: Integrated services user part
- LAN: Local Area Network
- LE: Local Exchange, Ortsvermittlungsstelle
- Load: Auslastung
- PC: Personal Computer, Kommunikationsendgerät
- PoP: Point of Presence
- PSTN: Public Switched Telephone Network, öffentliches Netz
- REL: Release (Aufforderung, einen Ruf zu beenden)
- RLC: ReLease Complete (Quittung eines LE, daß ein REL erfolgreich ausgeführt wurde)
- SCP: Service Control Point, Dienstesteuerungspunkt
- SSP: Service Switching Point, Dienstevermittlungspunkt
- TE: Transit Exchange, Durchgangsvermittlungsstelle

### Literaturverzeichnis

Q.12xx
General Recommendations an Telephone Switching And Signalling Intelligent Network
Q-Series Intelligent Network Recommendation Structure ITU 3/93

## Patentansprüche

1. Verfahren zum Aufbau von Verbindungen von einem Endgerät (PC) über ein erstes Netz (PSTN) zu einem Netzzugangspunkt (PoP) eines zweiten Netzes (Internet), bestehend aus:
a) Übermittlung eines Zugangswunsches zu dem zweiten Netz von einem Endgerät (PC) an das erste Netz,
b) Weiterleitung des Aufrufes in dem ersten Netz (PSTN) zu einem speziellen Netzknoten (IN) in diesem ersten Netz,
c) Bearbeitung des Aufrufes, und
d) Weiterleitung des Aufrufes unter Berücksichtigung von dem speziellen Netzknoten zur Verfügung stehenden Informationen (DB),
e) an einen ermittelten geeigneten Netzzugangspunkt (PoP1, PoP2, PoP3) zu dem zweiten Netz (Internet).

2. Verfahren nach Patentanspruch 1,
dadurch gekennzeichnet, daß
der Aufruf Angaben enthält über eine gewünschte Qualität des Zugangs zu dem zweiten Kommunikationsnetz.

3. Verfahren nach einem der vorherigen Patentansprüche,
dadurch gekennzeichnet, daß
die dem Netzknoten (IN) zur Verfügung stehenden Informationen (DB) Angaben über die von den einzelnen Netzzugangspunkten (PoP) bereit gestellten Qualität enthalten.

4. Verfahren nach einem der vorherigen Patentansprüche,
dadurch gekennzeichnet, daß
die dem Netzknoten (IN) zur Verfügung stehenden Informationen (DB) Angaben über die Auslastung (Load) der Netzzugangspunkte enthält.

5. Verfahren nach einem der vorherigen Patentansprüche,
dadurch gekennzeichnet, daß
die dem Netzknoten (IN) zur Verfügung stehenden Informationen (DB) eine stochastische Verteilungsfunktion enthalten, welche die Weiterleitung der Aufrufe auf jeweils ausgewählte geeignete Netzzugangspunkte (PoP) steuert.

6. Verfahren nach Patentanspruch 5,
dadurch gekennzeichnet, daß
die stochastische Verteilungsfunktion Informationen über die Netzlast in dem ersten Netz berücksichtigt.

7. Verfahren nach Patentanspruch 5 oder 6,
dadurch gekennzeichnet, daß
die stochastische Verteilungsfunktion die Anzahl der Aufrufversuche berücksichtigt.

8. Verfahren nach einem der vorherigen Patentansprüche,
dadurch gekennzeichnet, daß
der Netzknoten (IN) die Auslastung des ersten Netzes und/oder der Zugangspunkte zu dem zweiten Netz durch zielgerichtetes Probieren ermittelt.

9. Verfahren nach einem der vorherigen Patentansprüche,
dadurch gekennzeichnet, daß
der Netzknoten (IN) die ihm zur Verfügung stehenden Informationen (DB) von den Netzzugangspunkten(PoP1, DB1, PoP2, DB2, PoP3, DB3) erhält.

10. Verfahren nach einem der vorherigen Patentansprüche,
dadurch gekennzeichnet, daß
die Informationen durch den Netzknoten (IN) abgefragt werden.

11. Verfahren nach einem der vorherigen Patentansprüche,
dadurch gekennzeichnet, daß
die Informationen dem Netzknoten (IN) von den Zugangspunkten (PoP) geliefert werden.

12. Verfahren nach Patentanspruch 9 oder 11,
dadurch gekennzeichnet, daß
Informationen von einem Zugangspunkt (PoP) an den Netzknoten (IN) geliefert werden, wenn in dem Zugangspunkt (PoP) ein definiertes Ereignis erkannt wird.

13. Verfahren nach Patentanspruch 9, 11 oder 12,
dadurch gekennzeichnet, daß
ein Zugangspunkt (PoP) dem Netzknoten (IN) die notwendigen Informationen liefert, indem er einen Aufruf dem ersten Netz übergibt, wobei die Information bereits in dem Aufruf enthalten ist und dieser nicht durch das erste Netz bis zu dem Netzknoten vermittelt werden muß.

14. Verfahren nach einem der vorherigen Patentansprüche,
dadurch gekennzeichnet, daß
zu dem Netzknoten (IN) eine Konfigurierungsschnittstelle existiert, über welche es möglich ist, Änderungen vorzunehmen bezüglich der zur Weiterleitung von Aufrufen verwendeten Verteilungsfunktion.

15. Verfahren nach einem der vorherigen Patentansprüche,
dadurch gekennzeichnet, daß
die Zugangspunkte (PoP1, PoP2, PoP3) in Gruppen (Cluster, PoP1, PoP2) eingeteilt, wobei
a) die Bearbeitung eines Aufrufes die Identifizierung einer geeigneten Gruppe von Zugangspunkten beinhaltet, welche eine Untergruppe sämtlicher dem Netzknoten bekannten Zugangspunkte ist, und
b) aus dieser Gruppe dann ein geeigneter Zugangspunkt ermittelt und der Aufruf weitergeleitet wird.

16. Verfahren nach Patentanspruch 15,
dadurch gekennzeichnet, daß
die Gruppen (Cluster) abhängig von der Entfernung zu dem Benutzers eingeteilt werden.

17. Verfahren nach einem der vorherigen Patentansprüche,
dadurch gekennzeichnet, daß
es sich bei dem ersten Netz um ein schaltungsvermitteltes Daten- oder Kommunikationsnetz handelt und es sich bei dem zweiten Netz um ein paketvermittelndes Datennetz wie das Internet handelt.

18. Vorrichtung zur Bereitstellung eines Netzzuganges mit Mitteln zum Empfangen von Daten aus einem ersten Netz und Senden von Daten in ein erstes Netz, und mit Mitteln zum Empfangen von Daten aus einem zweiten Netz und Senden von Daten in ein zweites Netz, sowie mit Mitteln zum Austauschen von speziellen Informationen mit einem Knoten des ersten Netzes, wobei die Informationen den Auslastungzustand der Vorrichtung enthalten.

19. Vorrichtung nach Patentanspruch 18,
dadurch gekennzeichnet, daß
Informationen über den Auslastungszustand der Vorrichtung an den Netzknoten in dem ersten Netz übermittelt werden, sobald ein bestimmtes, zuvor definiertes, Ereignis eingetreten ist.
